# FASCICULE DE BREVET EUROPEEN

(11) **EP 3 644 486 B1**
(45) Date de publication et mention de la délivrance du brevet: **04.12.2024**
(21) Numéro de dépôt: 19203152.4
(22) Date de dépôt: 15.10.2019
(51) Int. Cl.: H02M 1/38, H02M 3/15

(54) **PROCÉDÉ DE RÉGLAGE D'UNE SOURCE D'ALIMENTATION À DÉCOUPAGE DU TYPE ABAISSEUR DE TENSION, ET SOURCE D'ALIMENTATION CORRESPONDANTE**
REGULIERUNGSVERFAHREN EINER QUELLE EINES STROMZUFÜHRUNGSSYSTEMS MIT PARTITIONIERUNG VOM TYP SPANNUNGSABSENKER, UND ENSPRECHENDE STROMQUELLE
METHOD FOR ADJUSTING A SWITCHING MODE POWER SUPPLY SOURCE OF THE VOLTAGE DOWN TYPE, AND CORRESPONDING POWER SUPPLY SOURCE

(30) Priorité: 25.10.2018 FR 1859865
(43) Date de publication de la demande: 29.04.2020
(73) Titulaire: STMicroelectronics (Grenoble 2) SAS, 38000 Grenoble (FR)
(72) Inventeur: CHESNEAU, David, 38000 Grenoble (FR)
(74) Mandataire: Casalonga

(56) Documents cités:
- EP-A1- 1 213 822
- WO-A1-96/10287
- US-A1- 2009 160 412

## Description

Des modes de mise en oeuvre et de réalisation de l'invention concernent les sources d'alimentation à découpage (« Switched Mode Power Supply » : SMPS en langue anglaise), plus particulièrement les sources d'alimentation à découpage du type abaisseur de tension (du type « BUCK » en langue anglaise), destinées à fonctionner dans un mode de modulation de largeur d'impulsion (« Pulse Width Modulation » : PWM en langue anglaise) ou dans un mode de modulation de fréquence d'impulsion (« Pulse Frequency Modulation » : PFM en langue anglaise).

Le mode de fonctionnement en PWM ou en PFM d'une telle source d'alimentation à découpage du type abaisseur de tension est généralement déterminé en fonction d'un courant de sortie et d'une tension de sortie délivrés à la sortie de ladite source d'alimentation à découpage.

D'une façon générale, une telle source d'alimentation à découpage comprend un premier transistor dit « côté haut » (« high side » en anglais) et un deuxième transistor dit « côté bas » (« low side » en anglais) ou une diode, connue de l'homme du métier sous le nom d'une diode de roue libre, couplés en série entre la source d'alimentation et la masse.

Le premier transistor « high side » est cycliquement mis en conduction par un premier signal de commande et un deuxième transistor « low side » est cycliquement mis en conduction par le deuxième signal de commande.

Dans le mode de modulation de largeur d'impulsion, les premier et deuxième transistors sont mis en conduction de façon alternative par les premier et deuxième signaux de commande.

Dans le mode de modulation de fréquence d'impulsion, les premier et deuxième transistors peuvent en outre être mis hors conduction en même temps en fonction des premier et deuxième signaux de commande.

Lorsqu'un courant de sortie élevé est requis en réponse à une charge de ladite source d'alimentation, ladite source d'alimentation fonctionne dans le mode de modulation de largeur d'impulsion et la période/fréquence du signal de commande est alors fixe.

Dans ce mode de modulation de largeur d'impulsion, ladite source d'alimentation est configurée pour générer via un module de comparaison de ladite source d'alimentation, une tension d'erreur en fonction de la tension de sortie et une tension de référence et générer via un module de génération de rampe une tension de rampe qui croît à partir de zéro jusqu'à la tension d'erreur de façon à déterminer la durée du premier état du signal de commande.

Lors d'une charge légère, autrement dit seulement un courant de sortie faible est requis en réponse à ladite charge, la source d'alimentation à découpage fonctionne dans le mode de modulation de fréquence d'impulsion et la fréquence du signal de commande est par conséquent variable.

Dans ce mode de modulation de fréquence d'impulsion, ladite source d'alimentation est configurée pour générer ladite tension de rampe et varier la période/fréquence du signal de commande en fonction d'une comparaison entre la tension de rampe et la tension de référence via un comparateur.

Il est connu de l'homme du métier que la tension de sortie de la source d'alimentation oscille fortement au moment d'un passage du mode de modulation de largeur d'impulsion au mode de modulation de fréquence d'impulsion ou d'un passage du mode de modulation de fréquence d'impulsion au mode de modulation de largeur d'impulsion si, à ce moment, la tension d'erreur et la tension de référence ne sont pas égales.

La publication WO 96/10287 A1 décrit un régulateur à découpage qui bascule automatiquement entre une mode de modulation de fréquence (PFM) et un mode de modulation de largeur d'impulsion (PWM) en fonction de la tension de sortie et du courant de sortie. Une tension de sortie constante est maintenue par une chaîne de rétroaction qui modifie le rapport cyclique du signal PWM en fonction des variations de la tension de sortie.

Il existe ainsi un besoin de proposer une solution technique à faible complexité et à faible coût permettant d'adoucir lesdits passages entre le mode de modulation de largeur d'impulsion et le mode de modulation de fréquence d'impulsion et améliorer la performance de la source d'alimentation à découpage.

Selon un aspect, il est proposé un procédé de réglage d'une source d'alimentation à découpage du type abaisseur de tension.

Ladite source d'alimentation est configurée pour délivrer une tension de sortie et comporte un transistor de puissance configuré pour être cycliquement mis en conduction par un premier signal de commande.

Ladite source d'alimentation est destinée à fonctionner
dans un mode de modulation de largeur d'impulsion dans lequel elle est configurée pour générer une tension d'erreur à partir de la tension de sortie et d'une tension de référence, ou
dans un mode de modulation de fréquence d'impulsion.

Ledit procédé comprend une application, dans le mode de modulation de largeur d'impulsion, d'un premier retard sur le signal de commande. Le premier retard est déterminé de façon à réduire l'écart entre la tension d'erreur et la tension de référence, tout particulièrement aux passages entre le mode de modulation de largeur d'impulsion et le mode de modulation de fréquence d'impulsion.

En effet, la source d'alimentation à découpage est typiquement configurée pour générer une tension de rampe contrôlée par un signal de commande complémentaire. Cette tension de rampe est comparée avec la tension d'erreur dans le mode de modulation de largeur d'impulsion ou avec la tension de référence dans le mode de modulation de fréquence d'impulsion. Le premier signal de commande et le signal de commande complémentaire sont ensuite générés à partir de cette comparaison.

Cependant, à cause du temps de propagation intrinsèque des signaux, à l'intérieur de la source, notamment pour la comparaison entre la tension d'erreur et la tension de rampe, la tension de rampe atteint la tension d'erreur toujours plus tôt que dans le cas idéal d'une source d'alimentation sans temps de propagation intrinsèque.

Il convient noter que la source d'alimentation à découpage fonctionne en boucle fermée et est configurée pour générer une bonne valeur du rapport cyclique du premier signal de commande de façon à rendre la tension de sortie égale à la tension de référence, quelle que soit la tension d'entrée de ladite source d'alimentation à découpage.

Il existe par ailleurs un écart entre la tension d'erreur et la tension de référence en fonction notamment de la tension d'entrée de la source d'alimentation à découpage. Plus cette tension d'entrée est grande, plus l'écart entre la tension d'erreur et la tension de référence est important.

Le fait d'appliquer ledit premier retard sur le premier signal de commande lorsque la source d'alimentation fonctionne dans le mode de modulation de largeur d'impulsion permet avantageusement
un démarrage de la génération de la tension de rampe avant la mise en conduction du transistor de puissance de façon à compenser ledit temps de propagation intrinsèque et réduire l'écart entre la tension d'erreur et la tension de référence, et
une diminution voire une élimination de l'influence de la tension d'entrée sur la qualité de la transition entre le mode de modulation de fréquence d'impulsion et le mode de modulation de largeur d'impulsion.

De ce fait, les transitions entre le mode de modulation de largeur d'impulsion et le mode de modulation de fréquence d'impulsion deviennent plus stables et entraînent moins d'oscillations sur la tension de sortie.

De surcroît, la tension d'erreur devient également plus stable et on peut obtenir un contrôle plus précis sur la tension de sortie de la source d'alimentation à découpage, ce qui est critique pour contrôler la consommation énergétique d'un microcontrôleur comportant une telle source d'alimentation à découpage.

Selon un mode de mise en oeuvre, ladite source est configurée pour générer, dans le mode de modulation de largeur d'impulsion, un premier signal intermédiaire à partir de la tension d'erreur et d'une tension de rampe.

Le premier retard est égal à la durée de ladite génération du premier signal intermédiaire.

Il convient de noter que le temps de propagation intrinsèque de la source d'alimentation dans le mode de modulation de largeur d'impulsion est par exemple principalement relié à un comparateur destiné à recevoir la tension d'erreur et la tension de rampe et configuré pour générer le premier signal intermédiaire.

Par conséquent, le premier retard appliqué correspond à ce temps de propagation.

Selon un autre mode de mise en oeuvre, le procédé comporte en outre une application, dans le mode de modulation de fréquence d'impulsion, d'un deuxième retard sur le premier signal de commande.

Ladite source peut par exemple être configurée pour générer, dans le mode de modulation de fréquence d'impulsion, un deuxième signal intermédiaire à partir de la tension de référence et d'une tension de rampe. Le deuxième retard est égal à la durée de ladite génération du deuxième signal intermédiaire.

Avantageusement, on peut également compenser, dans le mode de modulation de fréquence d'impulsion, ce deuxième retard correspondant au temps de propagation intrinsèque d'un autre comparateur destiné à recevoir la tension de référence et la tension de rampe et configuré pour générer le deuxième signal intermédiaire.

A titre indicatif non limitatif, les premier et deuxième retards peuvent par exemple être égaux.

Selon un autre mode de mise en oeuvre, le procédé comprend un passage du mode de modulation de fréquence d'impulsion au mode de modulation de largeur d'impulsion lorsque des premières conditions de passage sont remplies.

La source comporte typiquement en outre un transistor synchrone et une inductance de puissance couplée conjointement audit transistor de puissance et audit transistor synchrone et configurée pour délivrer un courant d'inductance traversant l'inductance de puissance.

Aussi, selon un mode de mise en oeuvre, les premières conditions de passage remplies comportent une détection d'un passage par zéro du courant d'inductance selon un sens prédéterminé et une détection de la tension de sortie inférieure à la tension de référence.

Selon encore un autre mode de mise en oeuvre, le procédé comprend un passage du mode de modulation de largeur d'impulsion au mode de fréquence d'impulsion lorsque des deuxièmes conditions de passage sont remplies.

Les deuxièmes conditions de passage remplies comportent par exemple une détection d'un passage par zéro du courant d'inductance selon un sens prédéterminé et une détection du premier signal de commande dans un état mettant en conduction le transistor de puissance.

Le sens prédéterminé peut par exemple correspondre à un passage du courant d'inductance par zéro à partir de ses valeurs positives.

Selon un autre aspect, il est proposé une source d'alimentation à découpage du type abaisseur de tension configurée pour délivrer une tension de sortie et comportant un transistor de puissance configuré pour être cycliquement mis en conduction par un premier signal de commande.

La source d'alimentation est destinée à fonctionner dans un mode de modulation de largeur d'impulsion ou dans un mode de modulation de fréquence d'impulsion.

La source d'alimentation comporte des moyens de traitement configurés pour générer une tension d'erreur à partir de la tension de sortie et d'une tension de référence et pour appliquer dans le mode de modulation de largeur d'impulsion, un premier retard sur le signal de commande, le premier retard étant déterminé de façon à réduire l'écart entre la tension d'erreur et la tension de référence, tout particulièrement aux passages entre le mode de modulation de largeur d'impulsion et le mode de modulation de fréquence d'impulsion.

Selon un mode de réalisation, les moyens de traitement comportent un premier module de comparaison destiné à recevoir la tension d'erreur et une tension de rampe.

Le premier module de comparaison a un premier temps de propagation intrinsèque. Le premier retard est égal audit premier temps de propagation intrinsèque.

Selon un autre mode de réalisation, les moyens de traitement sont en outre configurés pour appliquer, dans le mode de modulation de fréquence d'impulsion, un deuxième retard sur le premier signal de commande.

Les moyens de traitement peuvent par exemple comporter un deuxième module de comparaison configuré pour générer, dans le mode de modulation de fréquence d'impulsion, un deuxième signal intermédiaire à partir de la tension de référence et d'une tension de rampe.

Le deuxième module de comparaison a un deuxième temps de propagation intrinsèque, et le deuxième retard est égal audit deuxième temps de propagation intrinsèque.

Les premier et deuxième retards peuvent être égaux.

Selon un autre mode de réalisation, ladite source d'alimentation comporte en outre des moyens de commande configurés pour faire passer la source du mode de modulation de fréquence d'impulsion au mode de modulation de largeur d'impulsion lorsque des premières conditions de passage sont remplies.

Comme indiqué ci-avant, ladite source comporte typiquement un transistor synchrone et une inductance de puissance couplée conjointement audit transistor de puissance et audit transistor synchrone, et configurée pour délivrer un courant d'inductance traversant l'inductance de puissance.

Selon un mode de réalisation, les moyens de traitement comportent en outre un module de détection configuré pour détecter un passage par zéro du courant d'inductance selon un sens prédéterminé et comparer la tension de sortie et la tension de référence.

Les premières conditions de passage remplies comportent une détection du passage par zéro du courant d'inductance selon le sens prédéterminé et une détection de la tension de sortie inférieure à la tension de référence.

Selon encore un autre mode de réalisation, les moyens de commande sont en outre configurés pour faire passer la source d'alimentation du mode de modulation de largeur d'impulsion au mode de fréquence d'impulsion lorsque les deuxièmes conditions de passage sont remplies.

Les deuxièmes conditions de passage remplies comportent par exemple une détection du passage par zéro du courant d'inductance selon le sens prédéterminé et une détection du premier signal de commande dans un état mettant en conduction le transistor de puissance.

Le sens prédéterminé peut par exemple correspondre à un passage du courant d'inductance par zéro à partir de ses valeurs positives.

Selon un autre aspect, il est proposé une unité de gestion d'alimentation, comprenant au moins une source d'alimentation à découpage du type abaisseur de tension tel que définie ci-avant.

Selon encore un autre aspect, il est proposé un microcontrôleur incorporant une unité de gestion d'alimentation telle que définie ci-dessus.

Selon toujours un autre aspect, il est proposé un appareil électronique tel qu'un objet connecté, incorporant au moins un microcontrôleur tel que défini ci-dessus.

D'autres avantages et caractéristiques de l'invention apparaîtront à l'examen de la description détaillée de modes de mise en oeuvre et de réalisation nullement limitatifs, et des dessins annexés, sur lesquels :

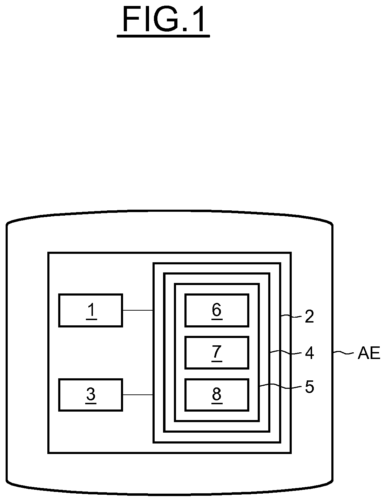

- les figures 1 à 6 illustrent schématiquement des modes de mise en oeuvre et de réalisation de l'invention.

La référence AE sur la figure 1 désigne un appareil électronique, ici par exemple un appareil intelligent connecté du type thermostat connecté AE.

Le thermostat connecté AE comprend
un étage de détection 1 configuré pour détecter des paramètres ambiants, tels que la température ambiante et l'humidité ambiante autour du thermostat AE,
un module de traitement 2 couplé à l'étage de détection 1 et configuré pour traiter des paramètres détectés par l'étage de détection 1, et
un module de communication 3 couplé au module de traitement 2 et configuré pour communiquer avec un autre objet connecté ou un serveur informatique via un réseau internet.

Le module de traitement 2 comporte un microcontrôleur 4, ici par exemple un microcontrôleur du type STM32^{®} commercialisé par la société STMicroelectronics.

Le microcontrôleur 4 comporte une unité de gestion d'alimentation 5 configurée pour gérer dynamiquement diverses sources d'alimentation et comportant au moins un oscillateur 16, un automate à un nombre fini d'états 7 (« Finite State Machine » : FSM en langue anglaise), et au moins une source d'alimentation à découpage 8 configurée pour délivrer une ou des tensions d'alimentation internes stables.

A des fins de simplification, on n'illustre ici par exemple qu'une source d'alimentation à découpage 8 du type abaisseur de tension (« BUCK » en anglais) destinée à fonctionner dans un mode de modulation de largeur d'impulsion PWM ou dans un mode de modulation de fréquence d'impulsion PFM connu de l'homme du métier.

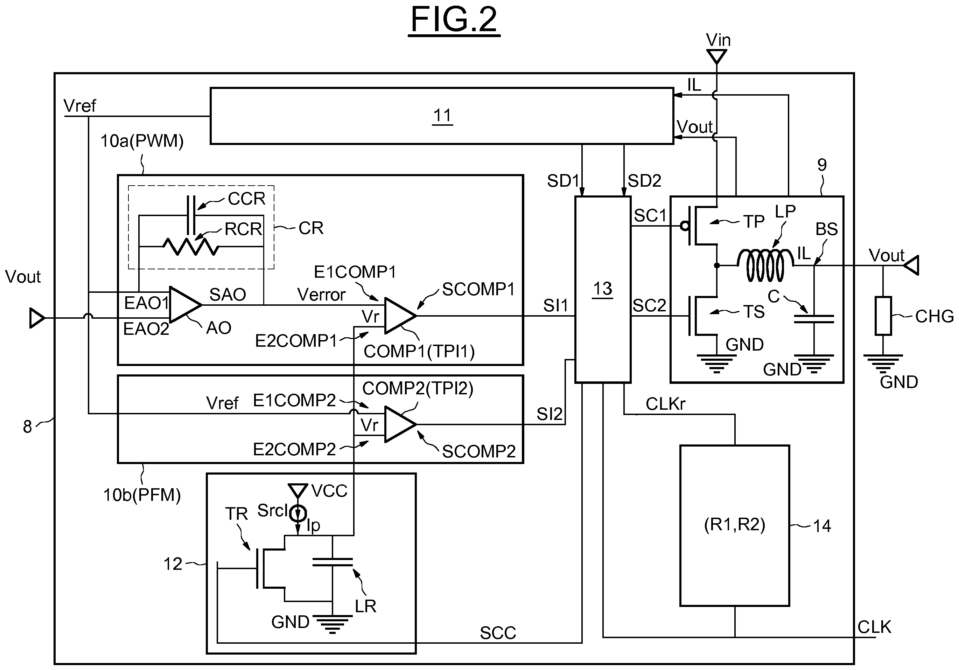

On se réfère maintenant à la figure 2 pour illustrer plus en détails un exemple de réalisation de ladite source d'alimentation à découpage 8.

Celle-ci comprend
un hacheur 9,
des moyens de traitement comportant un premier module de comparaison 10a, un deuxième module de comparaison 10b, un module de détection 11, un étage de génération de rampe 12, et un étage de retard 14, et
des moyens de commande 13.

Le hacheur 9 comporte
un transistor de puissance TP, par exemple un transistor MOS de type P, couplé entre une tension d'alimentation, autrement dit une tension d'entrée Vin, et un noeud intermédiaire NI,
un transistor TS, par exemple un transistor MOS de type N, couplé entre le noeud intermédiaire NI et la masse GND,
une inductance de puissance LP couplée entre le noeud intermédiaire NI et une borne de sortie BS, et
un condensateur C couplé entre la borne de sortie BS et la masse GND.

Le hacheur 9 est configuré pour délivrer une tension de sortie Vout sur la borne de sortie BS et un courant d'inductance IL traversant l'inductance de puissance LP.

La grille du transistor de puissance TP est destinée à recevoir un premier signal de commande SC1 tandis que la grille du transistor TS est destinée à recevoir un deuxième signal de commande SC2.

Dans le mode de modulation de largeur d'impulsion PWM, lorsque le premier signal de commande SC1 est dans un premier état mettant en conduction le transistor de puissance TP, le transistor TS contrôlé par le deuxième signal de commande SC2 est dans son état bloqué.

A contrario, dans le mode PWM, lorsque le premier signal de commande SC1 est dans un deuxième état mettant hors conduction le transistor de puissance TP, le transistor TS est dans son état passant.

Dans le mode PWM, le transistor TS contrôlé par le même signal de commande SC1 que celui contrôlant le transistor de puissance TP et étant dans un état bloqué lorsque le transistor de puissance TP est dans un état passant et vice versa, est désigné sous la dénomination bien connue de l'homme du métier de transistor « synchrone ».

Cela étant, dans le mode PFM, à part des deux cas décrits pour le mode PWM, les premier et deuxième signaux de commande SC1 et SC2 peuvent tous les deux être dans un état mettant hors conduction le transistor de puissance TP et le transistor TS.

Le transistor TS garde néanmoins son appellation de transistor synchrone.

Le module de détection 11 est couplé au hacheur 9 et destiné à recevoir le courant d'inductance IL, la tension de sortie Vout et une tension de référence Vref.

Le module de détection 11 est configuré pour détecter un passage par zéro du courant d'inductance IL selon un sens prédéterminé, ici par exemple à partir de ses valeurs positives et délivrer un premier signal de détection SD1 représentatif du résultat de la détection.

A titre d'exemple, le premier signal de détection SD1 est dans un état haut (« 1 ») lorsque la valeur du courant d'inductance IL descend sous zéro.

Le module de détection 11 est en outre configuré pour comparer la tension de sortie Vout et une tension de référence Vref. La tension de référence Vref est par exemple la valeur de la tension de sortie Vout souhaitée.

Pour ce faire, le module de détection 1 est configuré pour délivrer un deuxième signal de détection SD2 dont la valeur est représentative du résultat de la comparaison.

Le deuxième signal de détection SD2 peut par exemple dans un état haut (« 1 ») lorsque la tension de sortie Vout est inférieure à la tension de référence et dans un état bas (« 0 ») lorsque la tension de sortie Vout est supérieure à la tension de référence Vref.

L'étage de génération de rampe 12 comporte
un transistor de rampe TR, par exemple de type N, dont la grille est couplée à un signal de commande complémentaire SCC,
une source de courant SrcI couplée entre une source d'alimentation VCC et le drain du transistor de rampe TR et configurée pour délivrer un courant de polarisation Ip, et
un condensateur de rampe LR chargé par le courant de polarisation Ip et couplé entre le drain du transistor de rampe TR et la masse GND.

Lorsque le signal de commande complémentaire SCC est dans un état haut (« 1 ») mettant en conduction le transistor de rampe TR, le transistor de rampe TR est dans un état passant de façon à relier le drain du transistor de rampe TR à la masse GND. De ce fait, la tension sur le drain du transistor de rampe TP, autrement dit la tension de rampe Vr, retombe à zéro.

Lorsque le signal de commande complémentaire SCC est dans un état bas (« 0 ») mettant hors conduction le transistor de rampe TR, le transistor de rampe TR est dans un état bloqué et le courant de polarisation Ip commence à charger le condensateur de rampe LR de façon à augmenter la tension de rampe Vr.

Le premier module de comparaison 10a comporte
un amplificateur opérationnel AO dont la première entrée EAO1 est destinée à recevoir la tension de sortie Vout et dont la deuxième entrée EAO2 est destinée à recevoir la tension de référence Vref, et
un circuit de contre-réaction CR couplé à l'amplificateur opérationnel AO.

A des fins de simplifications, on illustre ici un circuit de contre-réaction CR simplifié qui comprend une résistance de contre-réaction RCR et un condensateur de contre-réaction CCR couplés en parallèle entre la première entrée EAO1 et la sortie SAO.

L'amplificateur opérationnel AO et le circuit de contre-réaction CR associée sont configurés pour amplifier l'écart entre la tension de sortie Vout et la tension de référence Vref de façon à générer à la sortie SAO de l'amplificateur opérationnel AO une tension d'erreur Verror.

Le premier module de comparaison 10a comporte en outre un premier comparateur COMP1 dont la première entrée E1COMP est destinée à recevoir la tension d'erreur Verror et dont la deuxième entrée E2COMP est couplée à l'étage de génération de rampe 12 et destinée à recevoir la tension de rampe Vr.

Le premier comparateur COMP 1 est configuré pour générer à la sortie SCOMP1 un premier signal intermédiaire SI1 en fonction de la tension d'erreur Verror et la tension de rampe Vr.

A titre indicatif, le premier signal intermédiaire SI1 est dans un état haut lorsque la tension de rampe Vr est inférieure à la tension d'erreur Verror et dans un état bas lorsque la tension de rampe Vr est supérieure à la tension d'erreur Verror.

La durée de l'état haut du premier signal intermédiaire SI1 correspond à une période croissante de la tension de rampe Vr qui est variable en fonction de la tension d'erreur Vr.

Comme la tension d'erreur Vr est générée en fonction l'écart entre la tension de référence Vref et la tension de sortie Vout, cette durée de l'état haut du premier signal intermédiaire SI1 est également en fonction de la tension de référence Vref et la tension de sortie Vout.

En conséquence, le premier signal intermédiaire SI1 est un signal cyclique et son rapport cyclique dépend de l'écart entre la tension de référence Vref et la tension de sortie Vout.

Comme le premier module de comparaison 10a comporte le premier comparateur COMP1 composé de plusieurs transistors, ce qui entraîne un temps de traitement relativement important par rapport à la période du signal d'horloge CLK, le premier module de comparaison 10a possède donc un premier temps de propagation intrinsèque TPI1, autrement dit un temps nécessaire à la propagation des signaux à l'intérieur du premier module de comparaison 10a.

Il convient de noter que le premier module de comparaison 10a est configuré pour être utilisé dans le mode de modulation de largeur d'impulsion PWM tandis que le deuxième module de comparaison 10b est configuré pour être utilisé dans le mode de modulation de fréquence d'impulsion PFM.

Le deuxième module de comparaison 10b comporte un deuxième comparateur COMP2 dont la première entrée E1COMP2 est destinée à recevoir la tension de référence Vref et dont la deuxième entrée E2COMP2 est destinée à recevoir la tension de rampe Vr.

Le deuxième module de comparaison 10b est configuré pour générer à sa sortie SCOMP2 un deuxième signal intermédiaire SI2 en fonction de la tension de référence Vref et la tension de rampe Vr.

Le deuxième comparateur COMP2 est également composé de plusieurs transistors, ce qui génère un deuxième temps de propagation intrinsèque TPI2 pour le deuxième module de comparaison 10b.

En variante, on peut également compenser ce deuxième temps de propagation intrinsèque complémentaire TPI2 lorsque la source d'alimentation 8 fonctionne dans le mode de modulation de fréquence d'impulsion PFM.

Cela étant, comme la tension de référence Vref utilisée pour être comparée avec la tension de rampe Vr est une tension fixe, la compensation du deuxième temps de propagation intrinsèque TPI2 n'est pas obligatoire.

Il convient de noter que le premier signal intermédiaire SI1 est délivré par le premier module de comparaison 10a pour le mode de modulation de largeur d'impulsion PWM et que le deuxième signal intermédiaire SI2 est délivré par le deuxième module de comparaison 10b pour le mode de modulation de fréquence d'impulsion PFM.

A titre d'exemple, les premier et deuxième comparateurs COMP1, COMP2 peuvent être identiques et les premier et deuxième temps de propagation intrinsèques TPI1, TPI2 peuvent être égaux.

Les moyens de commande 13 sont réalisés par exemple sous forme d'un contrôleur numérique, par exemple du type automate à un nombre fini d'états (« Finite State Machine » : FSM en langue anglaise), et sont destinés à recevoir les premier et deuxième signaux intermédiaires SI1, SI2, les premier et deuxième signaux de détection SD1, SD2, un signal d'horloge CLK, et un signal d'horloge retardé CLKr.

L'étage de retard 14 est destiné à recevoir le signal d'horloge CLK et configuré pour délivrer le signal d'horloge retardé CLKr ayant
pour le mode de modulation de largeur d'impulsion PWM, un premier retard R1 qui est égal au premier temps de propagation intrinsèque TPI1 du premier module de comparaison 10a, et
pour le mode de modulation de fréquence d'impulsion PFM, un deuxième retard R2 qui est égal au deuxième temps de propagation intrinsèque TPI2 du deuxième module de comparaison 10b.

Dans le cas où les premier et deuxième temps de propagation intrinsèque TPI1, TPI2 sont égaux, les premier et deuxième retards R1, R2 sont également égaux.

Lesdits premier et deuxième temps de propagation intrinsèque TPI1, TPI2 peuvent par exemple être pré-mesurés dans une phase d'étalonnage.

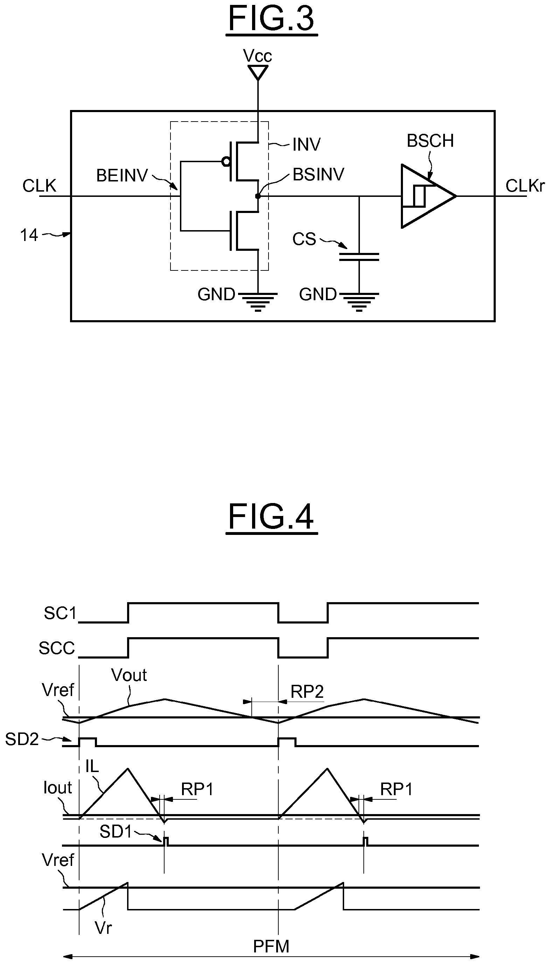

La figure 3 illustre un exemple de réalisation de l'étage de retard 14 pour le cas où les premier et deuxième retards R1, R2 sont égaux.

L'étage de retard 14 comporte un inverseur INV ayant un transistor MOS de type P et un transistor MOS de type N couplés en série entre la tension d'alimentation VCC et la masse GND.

Les grilles des transistors MOS de type P et de type N sont couplées conjointement de façon à former une borne d'entrée BEINV.

Les drains des transistors MOS de type P et de type N sont couplés ensemble de façon à former une borne de sortie BSINV.

L'étage de retard 14 comporte en outre
un déclencheur de schmitt BSCH (« Schmitt Trigger » en anglais) dont l'entrée est couplée à la borne de sortie BSINV, et
un condensateur supplémentaire CS couplé entre la borne de sortie BSINV et la masse GND.

En choisissant convenablement les dimensions des transistors de l'inverseur INV, l'étage de retard 14 génère à la sortie du déclencheur de schmitt BSCH le signal d'horloge retardé CLKr ayant par rapport au signal d'horloge CLK un retard qui est proche du, voire égal au premier ou au deuxième temps de propagation intrinsèque TPI1, TPI2.

En variante, l'étage de retard 14 peut par exemple comporter une même structure que celle du premier ou du deuxième module de comparaison 10a, 10b de façon à reproduire de façon plus précise le même premier ou deuxième temps de propagation intrinsèque TPI1 ou TPI2.

Les moyens de commande 13 sont configurés pour générer les premier et deuxième signaux de contrôle SC1, SC2 à partir des premier et deuxième signaux intermédiaires SI1, SI2.

Les premier et deuxième signaux de contrôle SC1, SC2 sont par exemple différents et non-synchronisés au signal d'horloge CLK lorsque ladite source d'alimentation à découpage 8 fonctionne dans le mode de modulation de fréquence d'impulsion PFM.

Dans ce mode PFM là, la fréquence et la période du premier signal de commande SC1 est modulable de façon à répondre à un courant de sortie faible à la borne de sortie BS du hacheur 9.

Dans ce cas là, le démarrage de la génération de la tension de rampe Vr et la mise en conduction du transistor de puissance TP peuvent par exemple être synchronisés.

La figure 4 illustre un chronogramme de la source d'alimentation à découpage 8 fonctionnant dans le mode de modulation de fréquence d'impulsion PFM.

La partie supérieure de la figure 4 illustre l'évolution de la tension de sortie Vout et la tension de référence Vref.

Lorsque la tension de sortie Vout est inférieure à la tension de référence Vref, le deuxième signal de détection SD2 est dans l'état haut après un deuxième retard prédéterminé RP2 correspondant à la durée de la comparaison entre la tension de sortie Vout et la tension de référence Vref effectuée par le module de détection 11 de façon à déclencher chaque période du premier signal de commande SC1 et du signal de commande complémentaire SCC.

Lorsque le premier signal de commande SC1 est dans l'état bas, le transistor de puissance du type P TP est mis en conduction et le courant d'inductance IL augmente.

Dans la même période, le signal de commande complémentaire SCC est également dans l'état bas et la tension de rampe Vr augmente de façon à dépasser la tension de référence Vref.

Le deuxième module de comparaison 10b possède également le deuxième temps de propagation intrinsèque TPI2. Le deuxième signal intermédiaire SI2 est dans l'état haut à un moment correspondant à l'instant où la tension de rampe Vr dépasse la tension de référence Vref augmenté du deuxième retard R2 égalant le deuxième temps de propagation intrinsèque TPI2.

Le deuxième signal intermédiaire SI2 déclenche les basculements du signal de commande SC1 et du signal de commande complémentaire SCC vers l'état haut.

A la suite de ces basculements, le courant d'inductance IL descend et la tension de rampe Vr est remise à zéro.

Le module de détection 11 est configuré pour générer le premier signal de détection SD1 dans l'état haut à un moment correspondant à l'instant où le courant d'inductance IL passe sous le zéro (devient négatif), augmenté d'un premier retard prédéterminé RP1 correspondant à la durée de la comparaison entre le courant d'inductance IL et la valeur zéro, effectuée par le module de détection 11.

Les moyens de commande 13 sont en outre configurés pour faire passer la source d'alimentation 8 du mode de modulation de fréquence d'impulsion PFM au mode de modulation de largeur d'impulsion PWM en fonction de la détection du passage par zéro du courant d'inductance IL et de la comparaison entre la tension de sortie Vout et la tension de référence Vref.

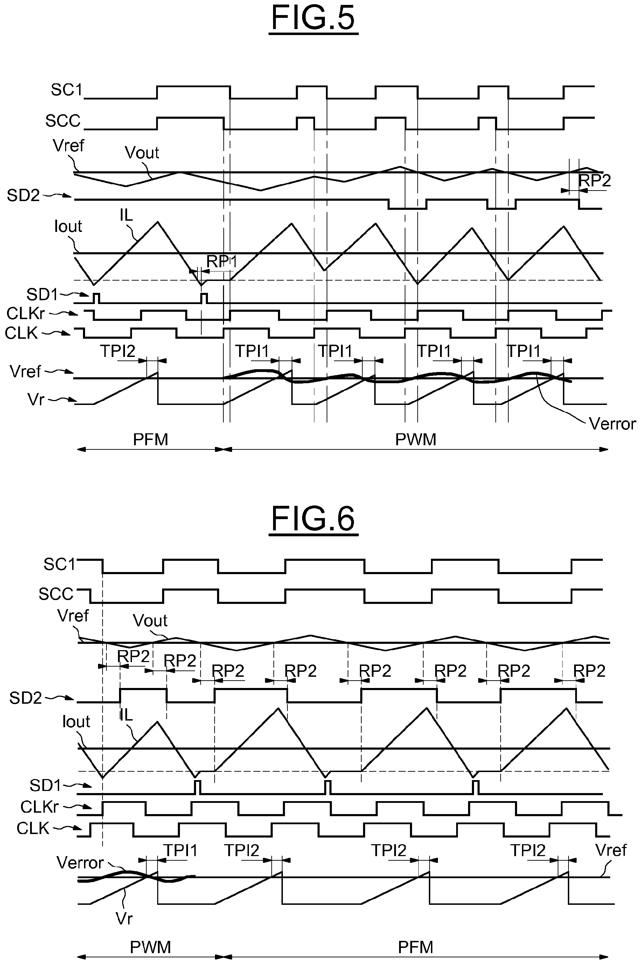

On se réfère maintenant à la figure 5 pour illustrer le chronogramme d'un exemple de mise en oeuvre de ce passage du mode PFM au mode PWM.

On constate que dans la partie gauche de la figure 5 la source d'alimentation 8 fonctionne dans le mode de modulation de fréquence d'impulsion PFM et dans la partie droite de la figure 5 la source d'alimentation 8 fonctionne dans le mode de modulation de largeur d'impulsion PWM.

Lorsqu'un passage par zéro du courant d'inductance IL à partir de ses valeurs positives est détecté et la tension de sortie Vout est inférieure à la tension de référence Vref, les moyens de commande 13 sont configurés pour faire passer la source d'alimentation 8 du mode de modulation de fréquence d'impulsion PFM au mode de modulation de largeur d'impulsion PWM au prochain front montant du signal d'horloge CLK.

On peut constater sur la figure 5 que la fréquence et la période du premier signal de commande SC1 et du signal de commande complémentaire SCC sont constantes pendant le mode de modulation de largeur d'impulsion PWM et que le premier signal de commande SC1 est retardé par rapport au signal de commande complémentaire SCC d'une durée égale au premier temps de propagation intrinsèque TPI1 du premier module de comparaison 10a.

On va maintenant décrire en se référant plus particulièrement à la figure 6 un passage du mode PWM au mode PFM.

Les moyens de commande 13 sont configurés pour faire passer la source d'alimentation 8 du mode de modulation de largeur d'impulsion PWM au mode de modulation de fréquence d'impulsion PFM en fonction des premier et deuxième signaux de détection SD1, SD2.

On illustre sur la figure 6 le chronogramme d'un exemple de mise en oeuvre de ce passage du mode PWM au mode PFM.

On constate que dans la partie gauche de la figure 6 la source d'alimentation 8 fonctionne dans le mode de modulation de largeur d'impulsion PWM et dans la partie droite de la figure 6 la source d'alimentation 8 fonctionne dans le mode de modulation de fréquence d'impulsion PFM.

Lorsqu'un passage par zéro du courant d'inductance IL à partir de ses valeurs positives est détecté, autrement dit le premier signal de détection SD1 est dans l'état haut, et que l'état bas du premier signal de commande SC1 est détecté par les moyens de commande 13, autrement dit le transistor de puissance TP est mis en conduction, les moyens de commande 13 sont configurés pour faire passer la source d'alimentation 8 du mode de modulation de largeur d'impulsion PWM au mode de modulation de fréquence d'impulsion PFM au prochain front montant du deuxième signal de détection SD2.

On peut constater sur la figure 6 que la fréquence et la période du premier signal de commande SC1 et du signal de commande complémentaire SCC sont variables pendant le mode de modulation de fréquence d'impulsion PFM et que le premier signal de commande SC1 n'est pas retardé par rapport au signal de commande complémentaire SCC.

Il convient de noter qu'il est également possible d'appliquer ledit premier retard R1 égalant le premier temps de propagation intrinsèque TPI1 du premier module de comparaison 10a entre le premier signal de commande SC1 et le signal de commande complémentaire SCC pendant tous les deux modes de modulation PFM, PWM.

De ce fait, au moins le premier temps de propagation intrinsèque TPI1 du premier module de comparaison 10a est compensé dans le mode de modulation de largeur d'impulsion PWM de façon à stabiliser la tension d'erreur Verror notamment au moment du passage dans l'un ou l'autre des modes PWM et PFM, et contrôler plus précisément la tension de sortie Vout de la source d'alimentation à découpage 8.

## Revendications

1. Procédé de réglage d'une source d'alimentation à découpage du type abaisseur de tension, ladite source (8) étant configurée pour délivrer une tension de sortie (Vout), comportant un transistor de puissance (TP) configuré pour être cycliquement mis en conduction par un premier signal de commande (SC1) et étant destinée à fonctionner dans un mode de modulation de largeur d'impulsion (PWM) dans lequel elle est configurée pour générer une tension d'erreur (Verror) à partir de la tension de sortie (Vout) et d'une tension de référence (Vref) ou dans un mode de modulation de fréquence d'impulsion (PFM), **caractérisé en ce que** le procédé comprend une génération du premier signal de commande (SC1) à partir d'une comparaison de la tension d'erreur (Verror) et d'une tension de rampe (Vr), et une application, dans le mode de modulation de largeur d'impulsion (PWM), d'un premier retard (R1) sur le premier signal de commande (SC1), le premier retard (R1) étant déterminé de façon à réduire l'écart entre la tension d'erreur (Verror) et la tension de référence (Vref), ladite source (8) étant configurée pour générer, dans le mode de modulation de largeur d'impulsion (PWM), un premier signal intermédiaire (SI1) à partir d'une comparaison de la tension d'erreur (Verror) et de la tension de rampe (Vr), et le premier retard (R1) est égal à la durée d'un premier temps de propagation intrinsèque (TPI1) de ladite génération du premier signal intermédiaire (SI1).

2. Procédé selon la revendication 1, comportant en outre une application, dans le mode de modulation de fréquence d'impulsion (PFM), d'un deuxième retard (R2) sur le premier signal de commande (SC1).

3. Procédé selon la revendication 2, dans lequel ladite source (8) est configurée pour générer, dans le mode de modulation de fréquence d'impulsion (PFM), un deuxième signal intermédiaire (SI2) à partir de la tension de référence (Vref) et d'une tension de rampe (Vr), et le deuxième retard (R2) est égal à la durée de ladite génération du deuxième signal intermédiaire (SI2).

4. Procédé selon la revendication 2 ou 3, dans lequel les premier et deuxième retards (R1, R2) sont égaux.

5. Procédé selon l'une quelconque des revendications précédentes, comprenant un passage du mode de modulation de fréquence d'impulsion (PFM) au mode de modulation de largeur d'impulsion (PWM) lorsque des premières conditions de passage sont remplies.

6. Procédé selon la revendication 5, dans lequel ladite source comportant en outre un transistor synchrone (TS) et une inductance de puissance (LP) couplée conjointement au transistor de puissance (TP) et au transistor synchrone (TS) et configurée pour délivrer un courant d'inductance (IL) traversant l'inductance de puissance (LP), et les premières conditions de passage remplies comportent une détection d'un passage par zéro du courant d'inductance (IL) selon un sens prédéterminé et une détection de la tension de sortie (Vout) inférieure à la tension de référence (Vref).

7. Procédé selon l'une quelconque des revendications précédentes, comprenant un passage du mode de modulation de largeur d'impulsion (PWM) au mode de largeur d'impulsion (PFM) lorsque des deuxièmes conditions de passage sont remplies.

8. Procédé selon la revendication 7, dans lequel ladite source (8) comportant en outre un transistor synchrone (TS) et une inductance de puissance (LP) couplée conjointement au transistor de puissance (TP) et au transistor synchrone (TS) et configurée pour délivrer un courant d'inductance (IL) traversant l'inductance de puissance (LP), les deuxièmes conditions de passage remplies comportent une détection d'un passage par zéro du courant d'inductance (IL) selon un sens prédéterminé et une détection du premier signal de commande (SC1) dans un état mettant en conduction le transistor de puissance (TP).

9. Procédé selon la revendication 6 ou 7, dans lequel le sens prédéterminé correspond à un passage du courant d'inductance (IL) par zéro à partir de ses valeurs positives.

10. Source d'alimentation à découpage du type abaisseur de tension configurée pour délivrer une tension de sortie (Vout), comportant un transistor de puissance (TP) configuré pour être cycliquement mis en conduction par un premier signal de commande (SC1) et étant destinée à fonctionner dans un mode de modulation de largeur d'impulsion (PWM) ou dans un mode de modulation de fréquence d'impulsion (PFM), la source comportant des moyens de traitement configurés pour générer une tension d'erreur (Verror) à partir de la tension de sortie (Vout) et d'une tension de référence (Vref), et pour appliquer, dans le mode de modulation de largeur d'impulsion (PWM), un premier retard (R1) sur le premier signal de commande (SC1), le premier retard (R1) étant déterminé de façon à réduire l'écart entre la tension d'erreur (Verror) et la tension de référence (Vref), la source (8) étant configurée pour générer le premier signal de commande (SC1) à partir d'une comparaison de la tension d'erreur (Verror) et d'une tension de rampe (Vr), les moyens de traitement comportant un premier module de comparaison (10a) configuré pour générer, dans le mode de modulation de largeur d'impulsion (PWM), un premier signal intermédiaire (SI1) à partir d'une comparaison de la tension d'erreur (Verror) et de la tension de rampe (Vr), le premier module de comparaison (10a) ayant un premier temps de propagation intrinsèque (TPI1), et le premier retard (R1) est égal audit premier temps de propagation intrinsèque (TPI1).

11. Source d'alimentation selon la revendication 10, dans laquelle les moyens de traitement sont en outre configurés pour appliquer, dans le mode de modulation de fréquence d'impulsion (PFM), un deuxième retard (R2) sur le premier signal de commande (SC1).

12. Source d'alimentation selon la revendication 11, dans laquelle les moyens de traitement comportent un deuxième module de comparaison (10b) configuré pour générer, dans le mode de modulation de fréquence d'impulsion (PFM), un deuxième signal intermédiaire (SI2) à partir de la tension de référence (Vref) et d'une tension de rampe (Vr), le deuxième module de comparaison (10b) ayant un deuxième temps de propagation intrinsèque (TPI2), et le deuxième retard (R2) est égal audit deuxième temps de propagation intrinsèque (TPI2).

13. Source d'alimentation selon la revendication 11 ou 12, dans laquelle les premier et deuxième retards (R1, R2) sont égaux.

14. Source d'alimentation selon l'une quelconque des revendications 10 à 13, comportant en outre des moyens de commande (13) configurés pour faire passer la source (8) du mode de modulation de fréquence d'impulsion (PFM) au mode de modulation de largeur d'impulsion (PWM) lorsque des premières conditions de passage sont remplies.

15. Source d'alimentation selon la revendication 14, comportant en outre un transistor synchrone (TS) et une inductance de puissance (LP) couplée conjointement au transistor de puissance (TP) et au transistor synchrone (TS), et configurée pour délivrer un courant d'inductance (IL) traversant l'inductance de puissance (LP), et les moyens de traitement comportent en outre un module de détection (11) configuré pour détecter un passage par zéro du courant d'inductance (IL) selon un sens prédéterminé et comparer la tension de sortie (Vout) et la tension de référence (Vref), les premières conditions de passage remplies comportant une détection du passage par zéro du courant d'inductance (IL) selon le sens prédéterminé et une détection de la tension de sortie (Vout) inférieure à la tension de référence (Vref).

16. Source d'alimentation selon l'une quelconque des revendications 10 à 15, comportant en outre des moyens de commande (13) configurés pour passer du passage du mode de modulation de largeur d'impulsion (PWM) au mode de fréquence d'impulsion (PFM) lorsque des deuxièmes conditions de passage sont remplies.

17. Source d'alimentation selon la revendication 16, comportant en outre un transistor synchrone (TS) et une inductance de puissance (LP) couplée conjointement au transistor de puissance (TP) et au transistor synchrone (TS), et configurée pour délivrer un courant d'inductance (IL) traversant l'inductance de puissance (LP), les moyens de traitement comportent en outre un module de détection (11) configuré pour détecter un passage par zéro du courant d'inductance (IL) selon un sens prédéterminé, les deuxièmes conditions de passage remplies comportant une détection du passage par zéro du courant d'inductance (IL) selon le sens prédéterminé et une détection du premier signal de commande (SC1) dans un état mettant en conduction le transistor de puissance (TP).

18. Source d'alimentation selon la revendication 10 ou 11, dans laquelle le sens prédéterminé correspond à un passage du courant d'inductance (IL) par zéro à partir de ses valeurs positives.

19. Unité de gestion d'alimentation, comprenant au moins une source d'alimentation à découpage (8) du type abaisseur de tension selon l'une quelconque des revendications 10 à 18.

20. Microcontrôleur incorporant une unité de gestion de l'alimentation (5) selon la revendication 19.

21. Appareil électronique tel qu'un objet connecté, incorporant au moins un microcontrôleur (4) selon la revendication 20.

## Patentansprüche

1. Regulierungsverfahren einer Schaltnetzteilquelle vom Typ Spannungsabsenker, wobei die Quelle (8) konfiguriert ist, um eine Ausgangsspannung (Vout) zu liefern, einen Leistungstransistor (TP) beinhaltet, der konfiguriert ist, um durch ein erstes Steuersignal (SC1) zyklisch eingeschaltet zu werden, und die dazu bestimmt ist, in einem Pulsbreitenmodulationsmodus (PWM), in dem sie konfiguriert ist, eine Fehlerspannung (Verror) anhand der Ausgangsspannung (Vout) und einer Referenzspannung (Vref) zu erzeugen, oder in einem Pulsfrequenzmodulationsmodus (PFM) zu arbeiten, **dadurch gekennzeichnet, dass** das Verfahren ein Erzeugen des ersten Steuersignals (SC1) anhand eines Vergleichs der Fehlerspannung (Verror) und einer Rampenspannung (Vr) und ein Anwenden einer ersten Verzögerung (R1) am ersten Steuersignal (SC1) im Pulsbreitenmodulationsmodus (PWM) umfasst, wobei die erste Verzögerung (R1) bestimmt wird, um die Abweichung zwischen der Fehlerspannung (Verror) und der Referenzspannung (Vref) zu reduzieren, wobei die Quelle (8) konfiguriert ist, um ein erstes Zwischensignal (SI1) anhand eines Vergleichs der Fehlerspannung (Verror) und der Rampenspannung (Vr) im Pulsbreitenmodulationsmodus (PWM) zu erzeugen, und die erste Verzögerung (R1) gleich der Dauer einer ersten intrinsischen Ausbreitungszeit (TPI1) des Erzeugens des ersten Zwischensignals (SI1) ist.

2. Verfahren nach Anspruch 1, das weiter ein Anwenden einer zweiten Verzögerung (R2) am ersten Steuersignal (SC1) im Pulsfrequenzmodulationsmodus (PFM) beinhaltet.

3. Verfahren nach Anspruch 2, wobei die Quelle (8) konfiguriert ist, um ein zweites Zwischensignal (SI2) anhand der Referenzspannung (Vref) und einer Rampenspannung (Vr) im Pulsfrequenzmodulationsmodus (PFM) zu erzeugen, und die zweite Verzögerung (R2) gleich der Dauer des Erzeugens des zweiten Zwischensignals (SI2) ist.

4. Verfahren nach Anspruch 2 oder 3, wobei die erste und zweite Verzögerung (R1, R2) gleich sind.

5. Verfahren nach einem der vorstehenden Ansprüche, das einen Übergang vom Pulsfrequenzmodulationsmodus (PFM) in den Pulsbreitenmodulationsmodus (PWM) umfasst, wenn die ersten Übergangsbedingungen erfüllt sind.

6. Verfahren nach Anspruch 5, wobei die Quelle weiter einen Synchrontransistor (TS) und eine Leistungsinduktivität (LP) beinhaltet, die zusammen an den Leistungstransistor (TP) und den Synchrontransistor (TS) gekoppelt sind und sie konfiguriert ist, um einen die Leistungsinduktivität (LP) durchquerenden Induktivitätsstrom (IL) zu liefern, und wobei die ersten erfüllten Übergangsbedingungen eine Detektion eines Nulldurchgangs des Induktivitätsstroms (IL) in einer vorbestimmten Richtung und eine Detektion der Ausgangsspannung (Vout), die niedriger als die Referenzspannung (Vref) ist, beinhalten.

7. Verfahren nach einem der vorstehenden Ansprüche, das einen Übergang vom Pulsbreitenmodulationsmodus (PWM) in den Pulsbreitenmodus (PFM) umfasst, wenn zweite Übergangsbedingungen erfüllt sind.

8. Verfahren nach Anspruch 7, wobei die Quelle (8) weiter einen Synchrontransistor (TS) und eine Leistungsinduktivität (LP) beinhaltet, die zusammen an den Leistungstransistor (TP) und den Synchrontransistor (TS) gekoppelt ist und die konfiguriert ist, um einen die Leistungsinduktivität (LP) durchquerenden Induktivitätsstrom (IL) zu liefern, wobei die zweiten erfüllten Übergangsbedingungen eine Detektion eines Nulldurchgangs des Induktivitätsstroms (IL) in einer vorbestimmten Richtung und eine Detektion des ersten Steuersignals (SC1) in einem Zustand, in dem der Leistungstransistor (TP) eingeschaltet wird, beinhalten.

9. Verfahren nach Anspruch 6 oder 7, wobei die vorbestimmte Richtung einem Nulldurchgang des Induktivitätsstroms (IL) aus seinen positiven Werten entspricht.

10. Schaltnetzteilquelle vom Typ Spannungsabsenker, das konfiguriert ist, um eine Ausgangsspannung (Vout) zu liefern, einen Leistungstransistor (TP) beinhaltet, der konfiguriert ist, um durch ein erstes Steuersignal (SC1) zyklisch eingeschaltet zu werden, und dazu bestimmt ist, in einem Pulsbreitenmodulationsmodus (PWM) oder in einem Pulsfrequenzmodulationsmodus (PFM) zu arbeiten, wobei die Quelle Verarbeitungsmittel beinhaltet, die konfiguriert sind, um eine Fehlerspannung (Verror) anhand der Ausgangsspannung (Vout) und einer Referenzspannung (Vref) zu erzeugen, und um eine erste Verzögerung (R1) am ersten Steuersignal (SC1) im Pulsbreitenmodulationsmodus (PWM) anzuwenden, wobei die erste Verzögerung (R1) bestimmt wird, um die Abweichung zwischen der Fehlerspannung (Verror) und der Referenzspannung (Vref) zu reduzieren, wobei die Quelle (8) konfiguriert ist, um anhand eines Vergleichs der Fehlerspannung (Verror) und einer Rampenspannung (Vr) das erste Steuersignal (SC1) zu erzeugen, wobei die Verarbeitungsmittel ein erstes Vergleichsmodul (10a) beinhalten, das konfiguriert ist, um ein erstes Zwischensignal (SI1) anhand eines Vergleichs der Fehlerspannung (Verror) und der Rampenspannung (Vr) im Pulsbreitenmodulationsmodus (PWM) zu erzeugen, wobei das erste Vergleichsmodul (10a) eine erste intrinsische Ausbreitungszeit (TPI1) aufweist und die erste Verzögerung (R1) gleich der ersten intrinsischen Ausbreitungszeit (TPI1) ist.

11. Netzteilquelle nach Anspruch 10, wobei die Verarbeitungsmittel weiter konfiguriert sind, um eine zweite Verzögerung (R2) am ersten Steuersignal (SC1) im Pulsfrequenzmodulationsmodus (PFM) anzuwenden.

12. Netzteilquelle nach Anspruch 11, wobei die Verarbeitungsmittel ein zweites Vergleichsmodul (10b) beinhalten, das konfiguriert ist, um ein zweites Zwischensignal (SI2) anhand der Referenzspannung (Vref) und einer Rampenspannung (Vr) im Pulsfrequenzmodulationsmodus (PFM) zu erzeugen, wobei das zweite Vergleichsmodul (10b) eine zweite intrinsische Ausbreitungszeit (TPI2) aufweist und die zweite Verzögerung (R2) gleich der zweiten intrinsischen Ausbreitungszeit (TPI2) ist.

13. Netzteilquelle nach Anspruch 11 oder 12, wobei die erste und zweite Verzögerung (R1, R2) gleich sind.

14. Netzteilquelle nach einem der Ansprüche 10 bis 13, die weiter Steuermittel (13) beinhaltet, die konfiguriert sind, um die Quelle (8) vom Pulsfrequenzmodulationsmodus (PFM) in den Pulsbreitenmodulationsmodus (PWM) übergehen zu lassen, wenn erste Übergangsbedingungen erfüllt sind.

15. Netzteilquelle nach Anspruch 14, die weiter einen Synchrontransistor (TS) und eine Leistungsinduktivität (LP) beinhaltet, die zusammen an den Leistungstransistor (TP) und den Synchrontransistor (TS) gekoppelt ist und die konfiguriert ist, um einen die Leistungsinduktivität (LP) durchquerenden Induktivitätsstrom (IL) zu liefern, und wobei die Verarbeitungsmittel weiter ein Detektionsmodul (11) beinhalten, das konfiguriert ist, um einen Nulldurchgang des Induktivitätsstroms (IL) in einer vorbestimmten Richtung zu detektieren und die Ausgangsspannung (Vout) und die Referenzspannung (Vref) zu vergleichen, wobei die ersten erfüllten Übergangsbedingungen eine Detektion des Nulldurchgangs des Induktivitätsstroms (IL) in der vorbestimmten Richtung und eine Detektion der Ausgangsspannung (Vout), die niedriger als die Referenzspannung (Vref) ist, beinhalten.

16. Netzteilquelle nach einem der Ansprüche 10 bis 15, die weiter Steuermittel (13) beinhaltet, die konfiguriert sind, um vom Pulsbreitenmodulationsmodus (PWM) in den Pulsfrequenzmodus (PFM) überzugehen, wenn zweite Übergangsbedingungen erfüllt sind.

17. Netzteilquelle nach Anspruch 16, die weiter einen Synchrontransistor (TS) und eine Leistungsinduktivität (LP) beinhaltet, die zusammen an den Leistungstransistor (TP) und den Synchrontransistor (TS) gekoppelt, und die konfiguriert ist, um einen die Leistungsinduktivität (LP) durchquerenden Induktivitätsstrom (IL) zu liefern, wobei die Verarbeitungsmittel weiter ein Detektionsmodul (11) beinhalten, das konfiguriert ist, um einen Nulldurchgang des Induktivitätsstroms (IL) in einer vorbestimmten Richtung zu detektieren, wobei die zweiten erfüllten Übergangsbedingungen eine Detektion des Nulldurchgangs des Induktivitätsstroms (IL) in der vorbestimmten Richtung und eine Detektion des ersten Steuersignals (SC1) in einem Zustand, in dem der Leistungstransistor (TP) eingeschaltet wird, beinhalten.

18. Netzteilquelle nach Anspruch 10 oder 11, wobei die vorbestimmte Richtung einem Nulldurchgang des Induktivitätsstroms (IL) aus seinen positiven Werten entspricht.

19. Netzteilverwaltungseinheit, die mindestens eine Schaltnetzteilquelle (8) vom Typ Spannungsabsenker nach einem der Ansprüche 10 bis 18 umfasst.

20. Mikrocontroller, der eine Netzteilverwaltungseinheit (5) nach Anspruch 19 einbezieht.

21. Elektronisches Gerät, wie etwa ein vernetztes Objekt, das mindestens einen Mikrocontroller (4) nach Anspruch 20 einbezieht.

## Claims

1. Method for adjusting a switching mode power supply source of the voltage-down type, said source (8) being configured to deliver an output voltage (Vout), including a power transistor (TP) configured to be cyclically turned on by a first control signal (SC1) and being intended to operate in a pulse width modulation (PWM) mode in which it is configured to generate an error voltage (Verror) from the output voltage (Vout) and a from reference voltage (Vref) or in a pulse frequency modulation (PFM) mode, **characterised in that** the method comprises generating the first control signal (SC1) from a comparison of the error voltage (Verror) and a ramp voltage (Vr) and applying, in the pulse width modulation (PWM) mode, a first delay (R1) to the first control signal (SC1), the first delay (R1) being determined so as to reduce the difference between the error voltage (Verror) and the reference voltage (Vref), said source (8) being configured to generate, in the pulse width modulation (PWM) mode, a first intermediate signal (SI1) from a comparison of the error voltage (Verror) and the ramp voltage (Vr), and the first delay (R1) is equal to the duration of a first intrinsic propagation time (TPI1) of said generation of the first intermediate signal (SI1).

2. Method according to claim 1, further including applying, in the pulse frequency modulation (PFM) mode, a second delay (R2) to the first control signal (SC1).

3. Method according to claim 2, wherein said source (8) is configured to generate, in the pulse frequency modulation (PFM) mode, a second intermediate signal (SI2) from the reference voltage (Vref) and a ramp voltage (Vr), and the second delay (R2) is equal to the duration of said generation of the second intermediate signal (SI2).

4. Method according to claim 2 or 3, wherein the first and second delays (R1, R2) are equal.

5. Method according to any one of the preceding claims, comprising a switchover from the pulse frequency modulation (PFM) mode to the pulse width modulation (PWM) mode, when the first switchover conditions are met.

6. Method according to claim 5, wherein said source further includes a synchronous transistor (TS) and a power inductor (LP) coupled jointly to the power transistor (TP) and to the synchronous transistor (TS) and configured to output an inductance current (IL) passing through the power inductor (LP), and the first met switchover conditions include detecting a zero-crossing of the inductance current (IL) in a predetermined direction and detecting output voltage (Vout) lower than the reference voltage (Vref).

7. Method according to any one of the preceding claims, comprising a switchover from the pulse width modulation (PWM) mode to the pulse frequency mode (PFM) when second switchover conditions are met.

8. Method according to claim 7, wherein said source (8) further including a synchronous transistor (TS) and a power inductor (LP) coupled jointly to the power transistor (TP) and to the synchronous transistor (TS) and configured to output an inductance current (IL) passing through the power inductor (LP), the second met switchover conditions include detecting a zero-crossing of the inductance current (IL) in a predetermined direction and detecting the first control signal (SC1) in a state turning on the power transistor (TP).

9. Method according to claim 6 or 7, wherein the predetermined direction corresponds to a zero-crossing of the inductance current (IL) from its positive values.

10. Switching mode power supply source of the voltage-down type configured to deliver an output voltage (Vout), including a power transistor (TP) configured to be cyclically turned on by a first control signal (SC1) and being intended to operate in a pulse width modulation (PWM) mode or in a pulse frequency modulation (PFM) mode, the source including processing means configured to generate an error voltage (Verror) from the output voltage (Vout) and from a reference voltage (Vref) and to apply, in the pulse width modulation (PWM) mode, a first delay (R1) to the first control signal (SC1), the first delay (R1) being determined so as to reduce the difference between the error voltage (Verror) and the reference voltage (Vref), the source (8) being configured to generate the first control signal (SC1) from a comparison of the error voltage (Verror) and a ramp voltage (Vr), the processing means including a first comparison module (10a) configured to generate, in the pulse width modulation (PWM) mode, a first intermediate signal (SI1) from a comparison of the error voltage (Verror) and the ramp voltage (Vr), the first comparison module (10a) having a first intrinsic propagation time (TPI1), and the first delay (R1) is equal to said first intrinsic propagation time (TPI1).

11. Power source according to claim 10, wherein the processing means are further configured to apply, in the pulse frequency modulation (PFM) mode, a second delay (R2) to the first control signal (SC1).

12. Power source according to claim 11, wherein the processing means include a second comparison module (10b) configured to generate, in the pulse frequency modulation (PFM) mode, a second intermediate signal (SI2) from the reference voltage (Vref) and from a ramp voltage (Vr), the second comparison module (10b) having a second intrinsic propagation time (TPI2), and the second delay (R2) is equal to said second intrinsic propagation time (TPI2).

13. Power source according to claim 11 or 12, wherein the first and second delays (R1, R2) are equal.

14. Power source according to any one of claims 10 to 13, further including control means (13) configured to switch the source (8) from the pulse frequency modulation (PFM) mode to the pulse width modulation (PWM) mode, when the first switchover conditions are met.

15. Power source according to claim 14, further including a synchronous transistor (TS) and a power inductor (LP) coupled jointly to the power transistor (TP) and to the synchronous transistor (TS), and configured to output an inductance current (IL) passing through the power inductor (LP), and the processing means further include a detection module (11) configured to detect a zero-crossing of the inductance current (IL) in a predetermined direction and to compare the output voltage (Vout) and the reference voltage (Vref), the first met switchover conditions including detection of the zero-crossing of the inductance current (IL) in the predetermined direction and a detection of the output voltage (Vout) being lower than the reference voltage (Vref).

16. Power source according to any one of claims 10 to 15, further including control means (13) configured to switch from pulse width modulation (PWM) mode to pulse frequency (PFM) mode when second switching conditions are met.

17. Power source according to claim 16, further including a synchronous transistor (TS) and a power inductor (LP) coupled jointly to the power transistor (TP) and to the synchronous transistor (TS), and configured to deliver an inductance current (IL) passing through the power inductor (LP), the processing means further include a detection module (11) configured to detect a zero-crossing of the inductance current (IL) in a predetermined direction, the second met crossing conditions including a detection of the zero-crossing of the inductance current (IL) in the predetermined direction and a detection of the first control signal (SC1) in a state turning on the power transistor (TP).

18. Power source according to claim 10 or 11, wherein the predetermined direction corresponds to a zero-crossing of the inductance current (IL) from its positive values.

19. Power management unit, comprising at least one switching power source (8) of the voltage-down type according to any one of claims 10 to 18.

20. Microcontroller incorporating a power supply management unit (5) according to claim 19.

21. Electronic appliance such as a connected object, incorporating at least one microcontroller (4) according to claim 20.
